# EUROPÄISCHE PATENTSCHRIFT

(11) **EP 1 438 495 B1**
(45) Veröffentlichungstag und Bekanntmachung des Hinweises auf die Patenterteilung: **04.04.2007**
(21) Anmeldenummer: 02774370.7
(22) Anmeldetag: 14.09.2002
(51) Int. Cl.: F02D 41/38, F02D 41/40

(54) **VERFAHREN, COMPUTERPROGRAMM, STEUER- UND REGELGERÄT ZUM BETREIBEN EINER BRENNKRAFTMASCHINE, SOWIE BRENNKRAFTMASCHINE**
METHOD, COMPUTER PROGRAM, CONTROL AND REGULATING APPLIANCE FOR OPERATING AN INTERNAL COMBUSTION ENGINE, AND INTERNAL COMBUSTION ENGINE
PROCEDE, PROGRAMME INFORMATIQUE, APPAREIL DE COMMANDE ET DE REGULATION POUR FAIRE FONCTIONNER UN MOTEUR A COMBUSTION INTERNE ET MOTEUR A COMBUSTION INTERNE

(30) Priorität: 18.10.2001 DE 10151513
(43) Veröffentlichungstag der Anmeldung: 21.07.2004
(73) Patentinhaber: ROBERT BOSCH GMBH, 70442 Stuttgart (DE)
(72) Erfinder: JOOS, Klaus, 74399 Walheim (DE); WOLBER, Jens, 70839 Gerlingen (DE); FRENZ, Thomas, 86720 Noerdlingen (DE); AMLER, Markus, 71229 Leonberg-Gebersheim (DE); HINN, Karsten, 35396 Giessen (DE)
(86) Internationale Anmeldenummer: PCT/DE2002/003452
(87) Internationale Veröffentlichungsnummer: WO 2003/038260

(56) Entgegenhaltungen:
- DE-A- 3 617 247
- DE-A- 19 611 710
- DE-A- 19 818 421
- US-A- 3 973 537

## Beschreibung

### Stand der Technik

Die Erfindung betrifft zunächst ein Verfahren zum Betreiben einer Brennkraftmaschine, bei dem der Kraftstoff von einer elektrisch angetriebenen Kraftstoffpumpe gefördert wird, welche einlassseitig mit einem Kraftstoffbehälter und auslassseitig mit einem Druckbereich verbunden ist, und bei dem vor dem Starten der Brennkraftmaschine ein Vorlauf der elektrisch angetriebenen Kraftstoffpumpe erfolgen kann, wobei ein Istdruck im Druckbereich von einem Drucksensor erfasst und die Durchführung des Vorlaufs mindestens vom Signal des Drucksensors abhängt.

Ein solches Verfahren ist vom Markt her bekannt. Bei diesem wird der Kraftstoff von einer elektrischen Kraftstoffpumpe aus einem Kraftstoffbehälter in einen Druckbereich gefördert. An diesen ist ein Kraftstoff-Einspritzventil angeschlossen. Dieses ist wiederum in einem Saugrohr der Brennkraftmaschine angeordnet. Auf diese Weise kann der Kraftstoff über das Kraftstoff-Einspritzventil in das Saugrohr und von dort in die Brennräume der Brennkraftmaschine gelangen. Ein weiteres Verfahren der eingangs genannten Art ist von Brennkraftmaschinen her bekannt, welche mit Benzindirekteinspritzung arbeiten. Bei diesen Brennkraftmaschinen wird der Kraftstoff von einer elektrischen Kraftstoffpumpe, welche auch als "Vorförderpumpe" bezeichnet wird, aus dem Kraftstoffbehälter in einen Druckbereich gefördert, von dem er zu einer im Allgemeinen mechanisch angetriebenen Hochdruck-Kraftstoffpumpe ("Hauptförderpumpe") gelangt. Diese fördert den Kraftstoff weiter in eine Kraftstoff-Sammelleitung ("Rail"). An diese sind mehrere Injektoren angeschlossen, und in ihr ist der Kraftstoff unter hohem Druck gespeichert. Die Injektoren spritzen den Kraftstoff jeweils direkt in die entsprechenden Brennräume der Brennkraftmaschine ein.

Wenn die elektrische Kraftstoffpumpe und der stromabwärts von dieser angeordnete Druckbereich als sogenanntes "Konstant-Drucksystem" ausgelegt sind, ist der Druckbereich über einen mechanischen Druckregler mit dem Kraftstoffbehälter verbunden. Im Normalbetrieb fördert die elektrisch angetriebene Kraftstoffpumpe den Kraftstoff kontinuierlich und mit maximaler Förderleistung. Jene Kraftstoffmenge, welche bei Systemen mit Saugrohreinspritzung vom Einspritzventil nicht in das Saugrohr eingespritzt wird, und welche bei Systemen mit Benzindirekteinspritzung nicht von der Hochdruckpumpe weiter gefördert wird, fließt bei den bekannten Brennkraftmaschinen bzw. den bekannten Verfahren über den mechanischen Druckregler zurück in den Kraftstoffbehälter.

Da die elektrisch angetriebene Kraftstoffpumpe ständig mit maximaler Förderleistung läuft ist sichergestellt, dass der Druck im Druckbereich auch dann, wenn vom Einspritzventil bzw. den Injektoren die maximal mögliche Kraftstoffmenge angefordert wird, immer auf dem gewünschten Niveau bleibt.

Bekannt sind auch bedarfsgesteuerte Kraftstoffsysteme. Bei diesen handelt es sich auch um Konstant-Drucksysteme, bei denen durch die Ansteuerung eines mechanischen Druckreglers der Druck im Druckbereich auf einen konstanten Wert eingestellt wird. Die Kraftstoffpumpe wird somit nicht mehr voll, also ständig mit maximaler Leistung, sondern nur noch dem Bedarf der Brennkraftmaschine entsprechend angesteuert. Die überschüssige Kraftstoffmenge fließt über einen mechanischen Druckregler zurück in den Tank. Die Anpassung der Förderleistung an den aktuellen Betriebspunkt der Brennkraftmaschine bewirkt eine Kraftstoffersparnis, da die Antriebsleistung der elektrisch angetriebenen Kraftstoffpumpe in vielen Betriebsbereichen der Brennkraftmaschine reduziert werden kann.

Beim Start der Brennkraftmaschine muss ein solcher Druck im Druckbereich des Kraftstoffsystem bereitgestellt werden, dass der Kraftstoff in der gewünschten Weise in die Brennräume der Brennkraftmaschine gelangt. Üblicherweise wird angenommen, dass der Druck des Kraftstoffes im Druckbereich nach dem Abstellen der Brennkraftmaschine auf Umgebungsdruck absinkt. Um einen zum Starten der Brennkraftmaschine gewünschten Druck erreichen zu können, muss also mindestens die für die Komprimierung des Kraftstoffes auf den gewünschten Druck erforderliche Kraftstoffmenge gefördert werden. Auch die Ausdehnung des Kraftstoffsystems während des Druckaufbaus muss berücksichtigt werden. Bei einigen bekannten. Verfahren hängt während des Vorlaufs die Betriebszeit der mit konstanter Leistung angetriebenen Kraftstoffpumpe von der Zeitdauer ab, welche seit dem Abstellen der Brennkraftmaschine vergangen ist.

Aus der DE 199 61 298 A1 ist bekannt, als Kriterien für das Erfordernis eines Kraftstoffpumpenvorlaufs bspw. die Abstellzeit des Motors, einen Kraftstoffsystemdruck, die Anzahl bereits erfolgter Pumpenvorläufe, etc. zu verwenden.

Die DE 100 14 550 A1 beschreibt die Möglichkeit, den Kraftstoffdruck beim Vorlauf anhand eines Drucksensors über die Veränderung der Drehzahl der Kraftstoffpumpe zu steuern.

Bei diesem Verfahren wird die Förderleistung der elektrisch angetriebenen Kraftstoffpumpe während des Vorlaufs dem jeweiligen Bedarf angepasst. Dieser Bedarf wird durch das vom Drucksensor bereitgestellte Signal definiert. Wird vom Drucksensor signalisiert, dass der Druck im Druckbereich niedriger als gewünscht ist, wird die elektrische Kraftstoffpumpe entsprechend angesteuert. Wird vom Drucksensor dagegen signalisiert, dass der Druck im Druckbereich bereits dem gewünschten Druck entspricht, bleibt die elektrische Kraftstoffpumpe ausgeschaltet.

Die DE 36 17 247 A1 beschreibt eine Steuerschaltung zur Steuerung der.Drehzahl einer elektrischen Kraftstoffpumpe. Diese ist so gestaltet, dass die Kraftstoffpumpe während eines Startvorgangs die maximale Fördermenge liefert. Aus der DE 100 14 550 A1 ist ein Kraftstoffsystem bekannt mit einer variabel angesteuerten Kraftstoffpumpe bekannt. Die Zeitdauer eines Vorlaufs kann von einem Kraftstoffdruck abhängen. In der DE 199 61 298 A1 wiederum ist ein Kraftstoffsystem mit einer Kraftstoffpumpe gezeigt, die vor dem Start der Brennkraftmaschine solange betrieben wird, bis ein Sollvolumen gefördert ist,

Aufgabe der vorliegenden Erfindung ist es, ein Verfahren der eingangs genannten Art so weiterzubilden, dass die Brennkraftmaschine noch zuverlässiger startet und dabei der Vorlauf der elektrisch angetriebenen Kraftstoffpumpe möglichst kurz ist.

Diese Aufgabe wird durch eine Verfahren mit den Merkmalen des Anspruchs 1 gelöst. Weitere Lösungen sind in den neben- und untergeordneten Patentansprüchen angegeben.

### Vorteile der Erfindung

Durch das erfindungsgemäße Verfahren wird sichergestellt, dass der für einen optimalen Start der Brennkraftmaschine notwendige Druck des Kraftstoffs im Druckbereich während des Vorlaufs möglichst schnell erreicht und die elektrische Kraftstoffpumpe nur möglichst kurze Zeit angesteuert wird. Dies erleichtert und beschleunigt den Start der Brennkraftmaschine, da der hierfür erforderliche Kraftstoffdruck sehr schnell erreicht wird.

Vorteilhafte Weiterbildungen der Erfindung sind in den Unteransprüchen angegeben.

In einer ersten Weiterbildung wird vorgeschlagen, dass die Durchführung des Vorlaufs davon abhängt, ob im aktuellen Betriebszyklus bereits ein Vorlauf durchgeführt worden ist. Hierdurch wird verhindert, dass nach einem kurzzeitigen Ausschalten bspw. der Zündung eines Kraftfahrzeugs, in welches die Brennkraftmaschine eingebaut ist, ein Vorlauf der elektrischen Kraftstoffpumpe durchgeführt wird. Auch hierdurch wird vermieden, dass die elektrische Kraftstoffpumpe unnötig in Betrieb gesetzt wird.

Ferner wird vorgeschlagen, dass ein Vorlauf der elektrischen Kraftstoffpumpe durchgeführt wird, wenn der Istdruck mindestens gleich einem bestimmten Wert oder kleiner als ein bestimmter Wert ist und/oder der Vorlauf beendet wird, wenn der Istdruck einen bestimmten Wert erreicht oder überschreitet. Auch hierdurch wird die Betriebszeit der elektrischen Kraftstoffpumpe verkürzt.

Alternativ oder zusätzlich hierzu ist es möglich, dass der Vorlauf der elektrischen Kraftstoffpumpe beendet wird, wenn die Dauer des Vorlaufs einen bestimmten Wert erreicht oder überschreitet. Hierdurch wird vermieden, dass die elektrische Kraftstoffpumpe zu lange läuft, wenn kein Druck im Kraftstoffsystem aufgebaut werden kann (dies bedeutet also eine Art "Sicherheitsabschaltung"). Insbesondere auch bei kalten Außentemperaturen wird vermieden, dass durch einen überlangen Vorlauf der elektrischen Kraftstoffpumpe die Batterie, welche die elektrische Kraftstoffpumpe versorgt, zu stark belastet wird.

Eine leicht zu realisierende Möglichkeit, die maximale Leistung während des Vorlaufs der elektrischen Kraftstoffpumpe zu erreichen, besteht darin, dass die Leistung der Kraftstoffpumpe von einem PI-Regler abhängig von der Differenz zwischen erfasstem Druck und einem Solldruck im Druckbereich, und von einer Vorsteuerung abhängig vom Solldruck beeinflusst wird, und dass für einen Vorlauf der elektrischen Kraftstoffpumpe der Integrator des PI-Reglers folgendermaßen initialisiert wird: Maximal mögliche Ansteuerleistung minus normale Vorsteuerleistung minus Ansteuerleistung des P-Anteils des PI-Reglers.

Alternativ hierzu ist es möglich, dass die Leistung der Kraftstoffpumpe von einem PI-Regler abhängig von der Differenz zwischen erfasstem Druck und einem Solldruck im Druckbereich und von einer Vorsteuerung abhängig vom Solldruck beeinflusst wird und das für einen Vorlauf der elektrischen Kraftstoffpumpe in der Vorsteuerung zur normalen Vorsteuerleistung eine zusätzlich Vorlauf-Vorsteuerleistung addiert wird derart, dass die gesamte Vorsteuerleistung zunächst maximal ist. Auch dies ist softwaretechnisch einfach zu realisieren und stellt sicher, dass der Druck im Druckbereich mit maximaler Geschwindigkeit aufgebaut wird. Gleichzeitig wird bei diesem Verfahren jedoch vermieden, dass es nach dem Ende des Vorlaufs der elektrischen Kraftstoffpumpe zu einem Überschwinger kommt. Dies ist dann zu befürchten, wenn der Integrator des PI-Reglers mit einem relativ hohen Wert initialisiert wird. Dadurch, dass hier die Ansteuerung der elektrischen Kraftstoffpumpe mit maximaler Leistung durch die Vorsteuerung bewirkt wird, ist eine derartige Initialisierung nicht erforderlich.

In Weiterbildung hierzu wird vorgeschlagen, dass die zusätzliche Vorsteuerleistung dadurch gebildet wird, dass zu Beginn des Vorlaufs der elektrischen Kraftstoffpumpe auf den Eingang eines Tiefpasses der Wert Null gegeben und der Tiefpass mit folgendem Wert initialisiert wird: Maximal mögliche Ansteuerleistung minus normale Vorsteuerleistung. Unter der normalen Vorsteuerleistung wird hier wie oben jene Vorsteuerleistung verstanden, welche sich aus dem aktuellen Solldruck im Druckbereich des Kraftstoffsystems ergibt. Ein solches Verfahren ist softwaretechnisch sehr einfach zu realisieren. Durch den Tiefpass wird die elektrische Kraftstoffpumpe zunächst mit maximaler Leistung betrieben. Die zusätzliche Vorsteuerleistung ist somit zunächst maximal (sie entspricht der Differenz aus maximal möglicher Ansteuerleistung und normaler Vorsteuerleistung) und fällt dann entsprechend einer Exponentialfunktion auf Null ab.

Dabei wird besonders bevorzugt, wenn die Zeitkonstante des Tiefpasses von der Differenz zwischen Istdruck und dem Solldruck im Druckbereich abhängt. Der Solldruck kann dabei ein Wert sein, welcher einer üblicherweise vorhandenen Begrenzung des maximalen Gradienten nicht unterworfen ist. Ist die Differenz zwischen Istdruck und Solldruck sehr groß, klingt die zusätzliche Vorsteuerleistung relativ langsam auf Null ab. Ist die Differenz klein, erfolgt das Abklingen schneller.

Ferner kann vorgesehen werden, dass der Solldruck im Druckbereich mindestens für den Vorlauf der elektrischen Kraftstoffpumpe von der Temperatur in einem Bereich der Brennkraftmaschine abhängt. Bei warmer Brennkraftmaschine können ggf. vorhandene Dampfblasen durch einen erhöhten Druck im Druckbereich komprimiert werden. Bei kalter Brennkraftmaschine kann bei dieser Weiterbildung die Vorlaufdauer dagegen verkürzt werden.

Die Erfindung betrifft auch ein Computerprogramm, welches zur Durchführung des obigen Verfahrens geeignet ist, wenn es auf einem Computer durchgeführt wird. Dabei wird besonders bevorzugt, wenn das Computerprogramm auf einem Speicher, insbesondere auf einem Flash-Memory oder einem Ferrit-RAM, abgespeichert ist.

Weiterhin betrifft die Erfindung ein Steuer- und/oder Regelgerät zum Betreiben einer Brennkraftmaschine, bei der der Kraftstoff von einer elektrisch angetriebenen Kraftstoffpumpe gefördert wird, welche einlassseitig mit einem Kraftstoffbehälter und auslassseitig mit einem Druckbereich verbunden ist. Um die Startqualität der Brennkraftmaschine zu verbessern und die Abgasemissionen während des Starts zu reduzieren, wird vorgeschlagen, dass das Steuer- und/oder Regelgerät einen Speicher umfasst, auf dem ein Computerprogramm der obigen Art abgespeichert ist.

Weiterhin betrifft die Erfindung eine Brennkraftmaschine mit einem Kraftstoffsystem, mit einem Kraftstoffbehälter, mit einer elektrisch angetriebenen Kraftstoffpumpe, welche einlassseitig mit dem Kraftstoffbehälter und auslassseitig mit einem Druckbereich verbunden ist, wobei vor oder beim Starten der Brennkraftmaschine ein Vorlauf der elektrisch angetriebenen Kraftstoffpumpe erfolgen kann, und wobei ein Drucksensor vorhanden ist, welcher einen Istdruck im Druckbereich erfasst, und wobei die Durchführung des Vorlaufs mindestens vom Istdruck abhängt. Um die Startqualität der Brennkraftmaschine zu verbessern und die Abgasemissionen während des Starts zu reduzieren, wird vorgeschlagen, dass die Brennkraftmaschine ein Steuer- und/oder Regelgerät der obigen Art umfasst.

### Zeichnung

Nachfolgend werden besonders bevorzugte Ausführungsbeispiele der vorliegenden Erfindung unter Bezugnahme auf die beiliegenden Zeichnungen im Detail erläutert. In der Zeichnung zeigen:
- Figur 1: eine schematische Prinzipdarstellung einer Brennkraftmaschine mit einer elektrischen Kraftstoffpumpe;
- Figur 2: ein Flussdiagramm, welches ein Verfahren zur Durchführung eines Vorlaufs der elektrischen Kraftstoffpumpe von Figur 1 darstellt;
- Figur 3: ein Flussdiagramm, welches ein Verfahren zur Bestimmung der Ansteuerleistung der elektrischen Kraftstoffpumpe für den Verlauf von Figur 2 darstellt, wobei das Verfahren eine Vorsteuerung und einen PI-Regler umfasst;
- Figur 4: ein Flussdiagramm, welches in detaillierter Form eine erste Möglichkeit zur Bestimmung der Ansteuerleistung der elektrischen Kraftstoffpumpe für den Vorlauf darstellt; und
- Figur 5: ein Flussdiagramm ähnlich Figur 4, welches eine andere Möglichkeit zur Bestimmung der Ansteuerleistung der elektrischen Kraftstoffpumpe für den Vorlauf darstellt.

### Beschreibung der Ausführungsbeispiele

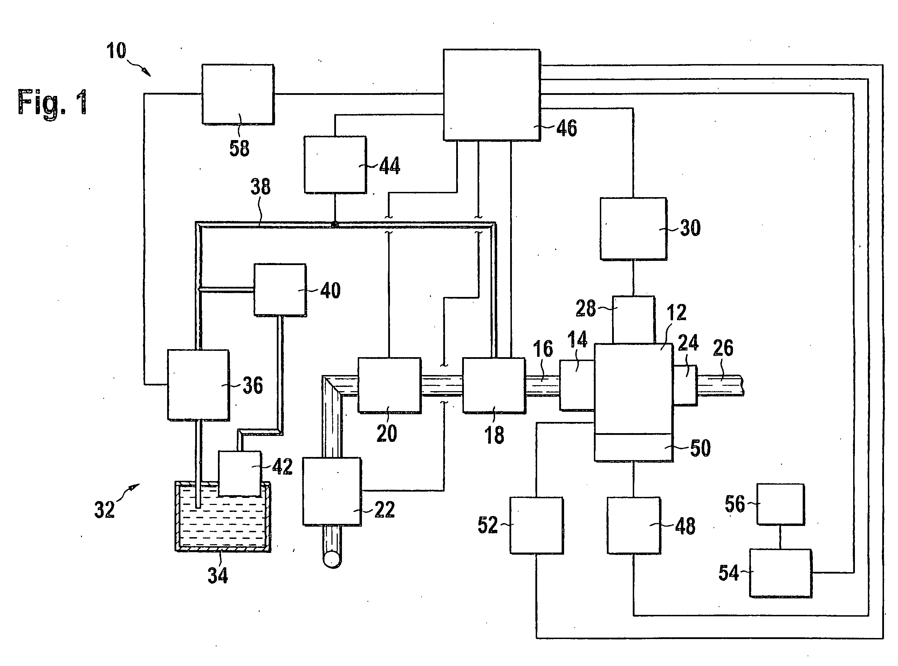

In Figur 1 trägt eine Brennkraftmaschine insgesamt das Bezugszeichen 10. Sie umfasst mehrere Brennräume, von denen in Figur 1 nur einer mit dem Bezugszeichen 12 dargestellt ist. Über ein Einlassventil 14 kann der Brennraum 12 mit einem Saugrohr 16 verbunden werden. Im Saugrohr 16 ist eine Kraftstoff-Einspritzvorrichtung 18 angeordnet. Stromaufwärts von der Kraftstoff-Einspritzvorrichtung 18 befinden sich im Saugrohr noch eine Drosselklappe 20 und ein als Heißfilmsensor ("HFM-Sensor") ausgebildeter Luftmassenmesser 22. Über ein Auslassventil 24 kann der Brennraum 12 mit einem Abgasrohr 26 verbunden werden. Ein sich im Brennraum 12 befindliches Kraftstoff-Luft-Gemisch wird von einer Zündkerze 28 gezündet. Diese wird von einem Zündsystem 30 angesteuert.

Die Kraftstoff-Einspritzvorrichtung 18 ist Teil eines Kraftstoffsystems 32. Dieses umfasst einen Kraftstoffbehälter 34, aus dem eine elektrisch angetriebene Kraftstoffpumpe 36 den Kraftstoff in eine Kraftstoffleitung 38 fördert, welche zur Kraftstoff-Einspritzvorrichtung 18 führt. Stromabwärts von der elektrisch angetriebenen Kraftstoffpumpe 36 ist die Kraftstoffleitung 38 mit einem Überströmventil 40 verbunden. Von diesem führt eine Leitung (ohne Bezugszeichen) zu einer Saugstrahlpumpe 42, die im Bereich des Kraftstoffbehälters 34 angeordnet ist.

Der in der Kraftstoffleitung 38 herrschende Kraftstoffdruck wird von einem Drucksensor 44 erfasst. Dieser liefert entsprechende Signale an ein Steuer- und Regelgerät 46. Dieses erhält auch Signale von dem HFM-Sensor 22 sowie einem Drehzahlsensor 48, der die Drehzahl einer Kurbelwelle 50 der Brennkraftmaschine 10 abgreift. Ferner werden dem Steuer- und Regelgerät 46 Signale von einem Temperatursensor 52 zugeführt, welcher die Temperatur eines Motorblocks (nicht dargestellt) der Brennkraftmaschine 10 erfasst. Auch ein Stellungsgeber 54, welcher die Stellung eines Zündschlüssels 56 erfasst, ist mit dem Steuer- und Regelgerät 46 verbunden. Die elektrisch angetriebene Kraftstoffpumpe 36, das Überströmventil 40, die Saugstrahlpumpe 42 und der Drucksensor 44 können als ein gemeinsames Modul im Kraftstoffbehälter 34 ausgebildet sein.

Ausgangsseitig steuert das Steuer- und Regelgerät 46 u.a. das Zündsystem 30, die Drosselklappe 20 und die Kraftstoff-Einspritzvorrichtung 18 an. Ferner wird auch die Ansteuerleistung der elektrischen Kraftstoffpumpe 36 vom Steuer- und Regelgerät 46 eingestellt. Dies geschieht durch die Ansteuerung eines Taktmoduls 58, welche ein Tastverhältnis ausgibt. Die Variation der Ansteuerleistung der elektrisch angetriebenen Kraftstoffpumpe 36 erfolgt also durch Pulsweitenmodulation (PWM).

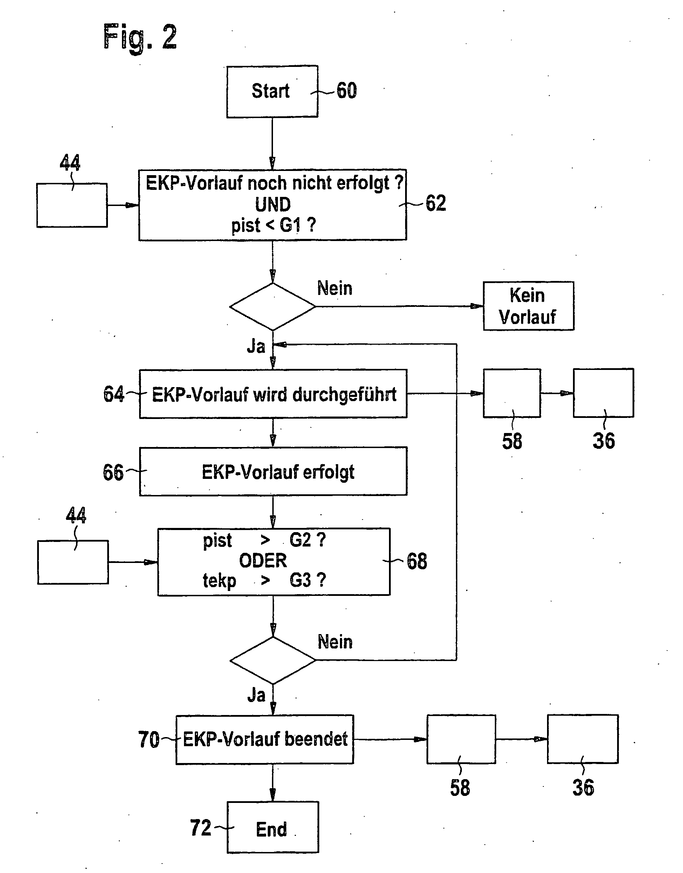

Zum Starten der Brennkraftmaschine 10 (das heißt, sobald die Zündung eingeschaltet wird) wird entsprechend Figur 2 vorgegangen: Nach einem Startblock 60 wird in einem Block 62 abgefragt, ob ein Vorlauf der elektrischen Kraftstoffpumpe 36 im aktuellen Betriebszyklus bereits erfolgt ist und ob ein vom Drucksensor 44 erfasster Istdruck pist kleiner ist als ein Grenzwert G1. Der Start im Block 60 wird initiiert, wenn vom Stellungsgeber 54 eine bestimmte Stellung des Zündschlosses 56 erfasst wird. Die Abfrage, ob ein Vorlauf der elektrischen Kraftstoffpumpe 36 im aktuellen Betriebszyklus bereits erfolgt ist, erfolgt durch die Prüfung eines Bits B1. Diese Prüfung ergibt dann, wenn im aktuellen Betriebszyklus bereits ein Vorlauf der elektrischen Kraftstoffpumpe 36 erfolgt ist, das Ergebnis "false".

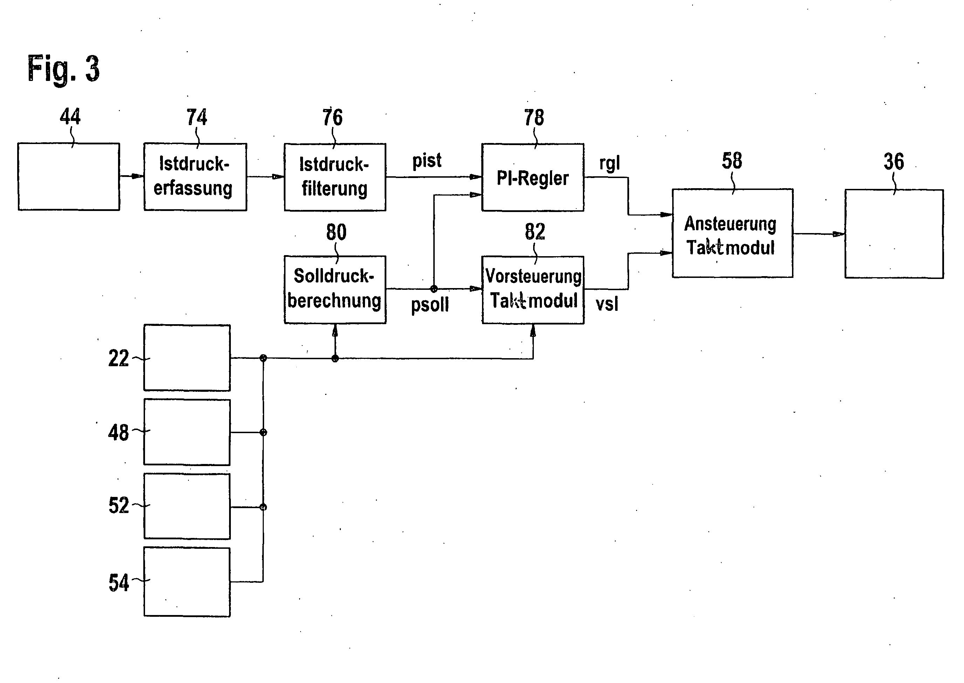

Ist eine der beiden Bedingungen oder sind beide Bedingungen im Block 62 nicht erfüllt, erfolgt kein Vorlauf. Sind beide Bedingungen dagegen erfüllt, wird im Block 64 der Taktmodul 58 angesteuert und die elektrische Kraftstoffpumpe 36 in Betrieb gesetzt. Die Ansteuerleistung, mit welcher die elektrische Kraftstoffpumpe 36 angesteuert wird, wird gemäß einem Verfahren berechnet, welches weiter unter im Zusammenhang mit den Figuren 3 bis 5 erläutert ist.

Im Block 66 wird das Bit B1 gesetzt, durch welches angezeigt wird, dass im aktuellen Betriebszyklus ein Vorlauf der elektrischen Kraftstoffpumpe 36 durchgeführt wurde. Solange ein Vorlauf der elektrischen Kraftstoffpumpe durchgeführt wird, wird ein Bit B2 gesetzt. Im Block 68 wird abgefragt, ob der Istdruck pist des Kraftstoffs in der Kraftstoffleitung 38 größer als oder gleich wie ein Grenzwert G2 ist. Im vorliegenden Fall sind beide Grenzwerte identisch. Die Grenzwerte G1 und G2 könnten aber auch unterschiedlich sein. Außerdem wird im Block 68 abgefragt, ob die Zeitdauer tekp, welche der Betriebszeit der elektrischen Kraftstoffpumpe 36 während des Vorlaufs entspricht, größer als oder gleich wie ein Grenzwert G3 ist. Wenn eine der beiden Bedingungen erfüllt ist, wird im Block 70 der Vorlauf der elektrischen Kraftstoffpumpe 36 beendet. Um Rechenzeit zu sparen, werden die Bedingungen für einen Vorlauf der elektrischen Kraftstoffpumpe nicht mehr gerechnet, wenn sich die Brennkraftmaschine im Normalbetrieb befindet. Dies wird ebenfalls durch die Abfrage eines entsprechenden Bits festgestellt.

Bei der in Figur 1 dargestellten Brennkraftmaschine wird die Ansteuerleistung der elektrischen Kraftstoffpumpe 36 u.a. abhängig vom Istdruck pist und einem Solldruck psoll in einer Kombination aus PI-Regler und Vorsteuerung bestimmt. Der Sollwert für den Druck in der Kraftstoffleitung 38 hängt grundsätzlich von den aktuellen Betriebsparametern der Brennkraftmaschine 10 ab, insbesondere von der vom Temperatursensor 52 erfassten Temperatur der Brennkraftmaschine 10, der vom Drehzahlsensor 58 erfassten Drehzahl der Kurbelwelle 50, der vom HFM-Sensor 22 erfassten Luftfüllung und der vom Stellungsgeber 54 erfassten Stellung des Zündschlosses 56. Die Einstellung des Drucks in der Kraftstoffleitung 38 erfolgt durch eine entsprechende Variation der Spannung (und in der Folge der Drehzahl bzw. des Drehmoments) der elektrischen Kraftstoffpumpe 36. Die Bestimmung der Ansteuerleistung der elektrischen Kraftstoffpumpe 36 ist in allgemeiner Form in Figur 3 dargestellt:
Danach wird in einem Block 74 der Istdruck pist in der Kraftstoffleitung 38 erfasst. Das entsprechende Signal wird vom Drucksensor 44 bereitgestellt. In der Istdruckerfassung 74 wird das vom Drucksensor 44 gelieferte Spannungssignal über zehn Messwerte gemittelt und dieser gemittelte Spannungswert über eine Spannungs-Druck-Kennlinie des Drucksensors 44 in einen Druckrohwert umgewandelt. In einem Block 76 wird der Druckrohwert gefiltert, woraus sich der Istdruck pist ergibt, und dieser Druckwert pist wird einem PI-Regler (Block 78) zugeführt.

Die Signale des HFM-Sensors 22, des Drehzahlsensors 48, des Temperatursensors 42 (und gegebenenfalls beispielsweise auch des Stellungsgebers 54 des Zündschlosses 56 oder hieraus resultierende Signale) werden in einem Block 80 zur Berechnung eines Solldrucks psoll verwendet. Dieser wird ebenfalls dem PI-Regler 78 zugeführt. Entsprechend der Differenz zwischen Solldruck psoll und Istdruck pist wird im PI-Regler 64, im Normalbetrieb der Brennkraftmaschine 10, eine Reglerleistung rgl bestimmt. Dies geschieht in Form eines bestimmten Tastverhältnisses, wie bei Pulsweitenmodulation üblich. Der Solldruck psoll und die Signale der Sensoren 22, 48, 52 und 54 werden aber auch im Block 82 zur Erzeugung einer Vorsteuerleistung vsl verwendet.

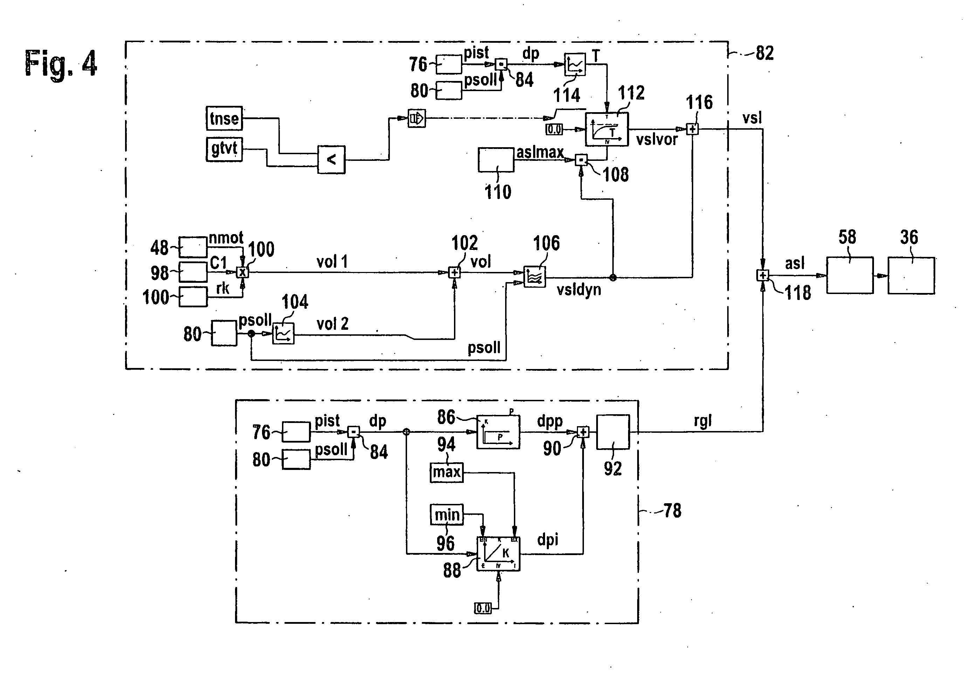

Die Bestimmung der Vorsteuerleistung für einen Vorlauf der elektrischen Kraftstoffpumpe 36 kann auf unterschiedliche Arten erfolgen. Ziel ist jeweils, einen gewünschten Druck in der Kraftstoffleitung 38 möglichst rasch bereitzustellen. Zu diesem Zweck sollte die elektrische Kraftstoffpumpe 36 wenigstens zu Beginn des Vorlaufs mit maximaler Leistung angesteuert werden. Eine Möglichkeit, diese maximale Ansteuerleistung zu Beginn des Vorlaufs bereitzustellen, ist in Figur 4 dargestellt. Die Berücksichtigung der speziellen Erfordernisse des Vorlaufs der elektrischen Kraftstoffpumpe 36 erfolgt dabei in der Vorsteuerung 82. Zunächst wird jedoch unter Bezugnahme auf Figur 4 die Bestimmung der normalen Reglerleistung rgl und der normalen Vorsteuerleistung vsl für den normalen dynamischen Betrieb der elektrischen Kraftstoffpumpe 36 (also bei laufender Brennkraftmaschine 10) erläutert:
Eine Reglerleistung rgl für den dynamischen Betrieb der elektrischen Kraftstoffpumpe 36 wird folgendermaßen bestimmt): Im PI-Regler 78 wird in 84 die Differenz dp zwischen dem Solldruck psoll und dem Istdruck pist gebildet. Diese Differenz dp wird in einen Proportionalregler 86 und einen Integrator 88 eingespeist. Der Proportionalregler 86 liefert einen Proportionalanteil dpp, der Integrator 88 einen Integralanteil dpi. In 90 werden die beiden Anteile dpp und dpi addiert und im Block 92 in die Reglerleistung rgl umgewandelt. Um ein Übersteuern des Integrators 88 zu verhindern, wird der Integralanteil dpi durch Grenzwerte max und min, welche in Speichern 94 und 96 bereitgestellt werden, begrenzt.

Die Vorsteuerleistung vsldyn für den dynamischen Betrieb wird folgendermaßen bestimmt: Aus der Drehzahl nmot, welche vom Drehzahlsensor 48 bereitgestellt wird, einer Motorkonstanten C1, welche in einem Speicher 98 abgelegt ist, und der relativen Kraftstoffmasse rk, welche im Block 100 bereitgestellt wird, wird durch Multiplikation in 100 ein Kraftstoff-Volumenstrom vol1 bestimmt. Bei diesem Kraftstoff-Volumenstrom handelt es sich um jenen Volumenstrom, welcher im Betrieb der Brennkraftmaschine 10 durch die Kraftstoff-Einspritzvorrichtung 18 in den Brennraum 12 gelangt.

Zu diesem Kraftstoff-Volumenstrom vol1 wird in 102 ein zweiter Anteil vol2 addiert. Dieser wird wiederum aus einer Kennlinie 104 ermittelt, welche mit dem Solldruck psoll adressiert wird. Beim Kraftstoff-Volumenstrom vo12 handelt es sich um jenen Volumenstrom, welcher aus der Kraftstoffleitung 38 über das Überströmventil 40 (dieses kann auch als Druckentlastungsventil ausgebildet sein) zur Saugpumpe 42 bzw. zurück in den Kraftstoffbehälter 34 strömt. Die Summe aus den beiden Anteilen vol1 und vol2 ergibt den insgesamt von der elektrischen Kraftstoffpumpe 36 zu fördernden Kraftstoff-Volumenstrom vol. Dieser wird zusammen mit dem Solldruck psoll in ein Kennfeld 106 eingespeist, welches die Vorsteuerleistung vsldyn für einen dynamischen Betrieb der elektrischen Kraftstoffpumpe 36 ausgibt.

Nun zur Bestimmung der Ansteuerleistung asl bei einem Vorlauf der elektrischen Kraftstoffpumpe 36: Um bei einem Vorlauf der elektrischen Kraftstoffpumpe 36 diese zunächst mit maximaler Leistung ansteuern zu können, wird dann, wenn ein Vorlauf erfolgen soll, in der Vorsteuerung 82 in 108 die Differenz zwischen der maximal zulässigen Ansteuerleistung aslmax der elektrischen Kraftstoffpumpe 36 und der Vorsteuerleistung vsldyn für den dynamischen Betrieb gebildet. Die maximal zulässige Ansteuerleistung aslmax ist in einem Speicher 110 abgelegt und hängt beispielsweise von dem verwendeten Taktmodul 58, welches ein Tastverhältnis erzeugt, ab (das Ausgangstastverhältnis ist eine Funktion der Eingangstastverhältnisses).

Ein Tiefpassfilter 112 wird mit der in 108 gebildeten Differenz initialisiert. Eine Zeitkonstante T des Tiefpassfilters 112 wird in 114 mittels einer Kennlinie bestimmt, in welche die Differenz dp zwischen dem Istdruck pist und dem Solldruck psoll eingespeist wird. Der Solldruck psoll ist in diesem Fall frei von einer Gradientenbegrenzung, wohingegen er für die Bestimmung des Kraftstoff-Volumenstroms vol2 sowie für die Verwendung im Regler 78 gradientenbegrenzt ist. Auf den Eingang des Tiefpassfilters 112 wird der Wert Null gegeben. Der Ausgang des Tiefpassfilters 112 liefert eine Vorsteuerleistung vslvor für den Vorlauf der elektrischen Kraftstoffpumpe 36. Diese wird in 116 zu der Vorsteuerleistung vsldyn für den dynamischen Betrieb der Brennkraftmaschine 10 addiert und ergibt die Gesamt-Vorsteuerleistung vsl. Diese wird wiederum in 118 zur Reglerleistung rgl addiert und ergibt die Gesamt-Ansteuerleistung asl.

Die Ansteuerleistung asl für einen Vorlauf der elektrischen Kraftstoffpumpe 36 wird folgendermaßen bestimmt: Da während des Vorlaufs der elektrischen Kraftstoffpumpe 36 die Brennkraftmaschine 10 noch nicht im Betrieb ist und sich somit die Kurbelwelle 50 noch nicht dreht, ergibt die Multiplikation in 100 den Wert Null. Die Vorsteuerleistung vsldyn für den dynamischen Betrieb der Brennkraftmaschine 10 ergibt sich somit ausschließlich aus dem Kraftstoff-Volumenstrom vol2 und dem Solldruck psoll. Der Solldruck psoll ergibt sich im Vorlauf der elektrischen Kraftstoffpumpe 36 aus einem Kennfeld abhängig von der Drehzahl nmot und einer Last rl oder, wie vorliegend, aus der Temperatur der Brennkraftmaschine 10, welche vom Temperatursensor 52 bereitgestellt wird.

Die in 106 ermittelte Vorsteuerleistung vsldyn für den dynamischen Betrieb der Brennkraftmaschine 10 ist jedoch relativ gering. Eine Bedingung signalisiert, dass ein Vorlauf erfolgen soll und gibt den Tiefpassfilter 112 frei. Die Bedingung besteht darin, dass dann, wenn eine Zeit tnse kleiner als ein Grenzwert gtvt ist, der Tiefpassfilter 112 freigegeben ist. Durch die Initialisierung des Tiefpassfilters 112 mit der Differenz zwischen der Vorsteuerleistung vsldyn und der maximal zulässigen Ansteuerleistung aslmax entspricht die Vorsteuerleistung vslvor für den Vorlauf der elektrischen Kraftstoffpumpe 36 zunächst exakt dieser Differenz. Da diese in 116 zu der Vorsteuerleistung vsldyn für den dynamischen Betrieb addiert wird, entspricht die Vorsteuerleistung vsl zu Beginn des Vorlaufs der elektrischen Kraftstoffpumpe 36 der maximal zulässigen Ansteuerleistung aslmax der elektrischen Kraftstoffpumpe 36. Die elektrische Kraftstoffpumpe 36 dreht somit zunächst mit maximaler Drehzahl und maximaler Förderleistung, so dass sich der Druck in der Kraftstoffleitung 38 mit maximaler Geschwindigkeit aufbaut. Wie oben ausgeführt worden ist, wird die Zeitkonstante T des Tiefpassfilters 112 abhängig von der Differenz zwischen dem Solldruck psoll und dem Istdruck pist gebildet. Eine große Differenz führt zu einer vergleichsweise großen Zeitkonstanten T, eine kleine Differenz zu einer entsprechend kleinen Zeitkonstanten T. Dies bedeutet, dass bei einer großen Differenz zwischen psoll und pist die Vorsteuerleistung vslvor vom Initialisierungswert langsamer auf Null abklingt als bei einer kleinen Differenz. Da auf diese Weise die Differenz zwischen dem Istdruck pist und dem Solldruck psoll während des Vorlaufs der elektrischen Kraftstoffpumpe 36 relativ rasch kleiner wird, baut sich im Integrator 88 des PI-Reglers 78 kein großer Integralanteil dpi auf, so dass ein reglerbedingter Überschwinger dann, wenn der Istdruck pist den Solldruck psoll erreicht, vermieden wird. Außerdem wird ein Überlauf des Integrators dadurch verhindert, dass durch ein entsprechende Bit der Integrator angehalten wird, wenn das maximale Tastverhältnis ausgegeben wird, gleichzeitig aber der Istdruck pist kleiner als der Solldruck psoll ist.

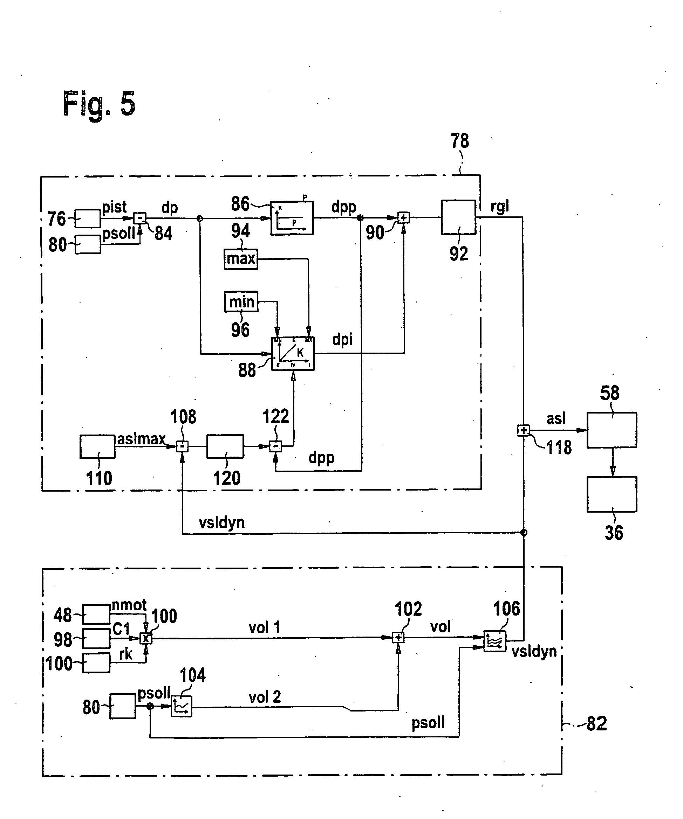

In Figur 5 ist eine zweite Möglichkeit dargestellt, mit der während eines Vorlaufs der elektrischen Kraftstoffpumpe 36 die Ansteuerleistung asl der elektrischen Kraftstoffpumpe 36 ermittelt werden kann. Jene Funktionen, welche dafür sorgen, dass zu Beginn des Vorlaufs die elektrische Kraftstoffpumpe 36 mit maximaler Leistung angesteuert wird, sind in Figur 5 nicht in der Vorsteuerung 82, sondern im PI-Regler 78 realisiert. Es sei an dieser Stelle darauf hingewiesen, dass solche Elemente, Blöcke und Funktionen, welche funktionsäquivalent zu Elementen, Blöcken und Funktionen von Figur 4 sind, die gleichen Bezugszeichen tragen und nicht in jedem Falle nochmals im Detail erläutert sind.

Analog zu Figur 4 wird im Block 82 eine Vorsteuerleistung vsldyn für den dynamischen Betrieb der Brennkraftmaschine 10 ermittelt. Ebenfalls analog zu Figur 4 wird in 108 die Differenz zwischen der maximal zulässigen Ansteuerleistung aslmax der elektrischen Kraftstoffpumpe 36 und der Vorsteuerleistung vsldyn für den dynamischen Betrieb der Brennkraftmaschine 10 gebildet. Diese Differenz wird in 120 in einen Druckwert umgewandelt, von dem in 122 der Proportionalanteil dpp, welcher im Proportionalregler 86. bestimmt wurde, abgezogen wird. Mit dem sich hieraus ergebenden Wert wird der Integrator 88 initialisiert.

Dies hat zur Folge, dass zu Beginn eines Vorlaufs der elektrischen Kraftstoffpumpe 36 die sich aus der Summe des Proportionalanteils dpp und des Integralanteils dpi in 90 bzw. 92 ergebende Reglerleistung rgl gleich der Differenz zwischen der maximal zulässigen Ansteuerleistung aslmax der elektrischen Kraftstoffpumpe 36 und der Vorsteuerleistung vsldyn für den dynamischen Betrieb der Brennkraftmaschine 10 ist. Da die Reglerleistung rgl in 118 zu der Vorsteuerleistung vsldyn addiert wird, ergibt sich zu Beginn des Vorlaufs der elektrischen Kraftstoffpumpe 36 eine Ansteuerleistung asl, welche gleich der maximal zulässigen Ansteuerleistung aslmax ist. Mit kleiner werdender Differenz zwischen dem Istdruck pist und dem Solldruck psoll sinkt die Reglerleistung dann wieder ab, so dass auch die Gesamt-Ansteuerleistung asl abnimmt.

Es wird darauf hingewiesen, dass die Initialisierung des Integrators 88 gemäß Figur 5 und die Bestimmung der Vorsteuerleistung vslvor gemäß Figur 4 jedes Mal dann erfolgen, wenn die Bedingung "Zündung ein" detektiert wird (Initialisierung des Motorsteuergeräts). Beide Schritte werden also bei einem Vorlauf der elektrischen 36 Kraftstoffpumpe als auch bei einem normalen Start der Brennkraftmaschine 10 ohne Vorlauf durchgeführt. Es wird ferner darauf hingewiesen, dass der im Zusammenhang mit den Figuren 3 bis 5 verwendete Begriff der "Leistung" in der Praxis durch einen Spannungs-, einen Stromwert oder ein Tastverhältnis zum Ausdruck kommen kann.

## Patentansprüche

1. Verfahren zum Betreiben einer Brennkraftmaschine (10), bei dem der Kraftstoff von einer elektrisch angetriebenen Kraftstoffpumpe (36) gefördert wird, welche einlassseitig mit einem Kraftstoffbehälter (34) und auslassseitig mit einem Druckbereich (38) verbunden ist, und bei dem vor dem Starten der Brennkraftmaschine (10) ein Vorlauf der elektrisch angetriebenen Kraftstoffpumpe (36) erfolgen kann, wobei ein Istdruck (pist) im Druckbereich (38) von einem Drucksensor (44) erfasst und die Durchführung des Vorlaufs mindestens vom Signal des Drucksensors (44) abhängt (62), **dadurch gekennzeichnet, dass** die Leistung der elektrischen Kraftstoffpumpe (36) bei einem Vorlauf zunächst maximal (aslmax) ist und danach während des Vorlaufs vom Signal des Drucksensors (44) abhängt.

2. Verfahren nach Anspruch 1, **dadurch gekennzeichnet, dass** die Durchführung des Vorlaufs davon abhängt, ob im aktuellen Betriebszyklus bereits ein Vorlauf (64) durchgeführt worden ist (62).

3. Verfahren nach einem der vorhergehenden Ansprüche, **dadurch gekennzeichnet, dass** ein Vorlauf der elektrischen Kraftstoffpumpe (36) durchgeführt wird, wenn der Istdruck (pist) mindestens gleich einem bestimmten Wert (G1) oder kleiner als bestimmter Wert ist, und/oder der Vorlauf der elektrischen Kraftstoffpumpe (36) beendet wird, wenn der Istdruck (pist) einen bestimmten Wert (G2) erreicht oder überschreitet.

4. Verfahren nach einem der vorhergehenden Ansprüche, **dadurch gekennzeichnet, dass** der Vorlauf der elektrischen Kraftstoffpumpe (36) beendet wird, wenn die Dauer (tekp) des Vorlaufs einen bestimmten Wert (G3) erreicht oder überschreitet.

5. Verfahren nach einem der vorhergehenden Ansprüche, **dadurch gekennzeichnet, dass** die Leistung der Kraftstoffpumpe (36) von einem PI-Regler (78) abhängig von der Differenz zwischen Istdruck (pist) und einem Solldruck (psoll) im Druckbereich (38) und von einer Vorsteuerung (82) abhängig vom Solldruck (psoll) beeinflusst wird, und dass für einen Vorlauf der elektrischen Kraftstoffpumpe (36) ein Integrator (88) des PI-Reglers (78) mit folgenden Werten oder diesen entsprechenden Werten initialisiert wird: maximal mögliche Ansteuerleistung (aslmax) minus normale Vorsteuerleistung (vsldyn) minus Ansteuerleistung des P-Anteils (dpp) des PI-Reglers (78).

6. Verfahren nach einem der vorhergehenden Ansprüche, **dadurch gekennzeichnet, dass** die Leistung der Kraftstoffpumpe (36) von einem PI-Regler (78) abhängig von der Differenz zwischen Istdruck (pist) und einem Solldruck (psoll) im Druckbereich (38) und von einer Vorsteuerung (82) abhängig vom Solldruck (psoll) beeinflusst wird, und dass für einen Vorlauf der elektrischen Kraftstoffpumpe (36) in der Vorsteuerung (82) zur normalen Vorsteuerleistung (vsldyn) eine zusätzliche Vorlauf-Vorsteuerleistung (vslvor) addiert wird, derart, dass die gesamte Vorsteuerleistung (vsl) zunächst maximal ist.

7. Verfahren nach Anspruch 6, **dadurch gekennzeichnet, dass** die zusätzliche Vorsteuerleistung (vslvor) dadurch gebildet wird, dass zu Beginn des Vorlaufs der elektrischen Kraftstoffpumpe (36) auf den Eingang eines Tiefpasses (112) der Wert Null gegeben und der Tiefpass (112) mit folgendem Wert oder einem entsprechenden Wert initialisiert wird: maximal mögliche Ansteuerleistung (aslmax) minus normale Vorsteuerleistung (vsldyn).

8. Verfahren nach Anspruch 7, **dadurch gekennzeichnet, dass** eine Zeitkonstante (T) des Tiefpasses (112) von der Differenz zwischen dem Istdruck (pist) und dem Solldruck (psoll) im Druckbereich (38) abhängt.

9. Verfahren nach einem der vorhergehenden Ansprüche, **dadurch gekennzeichnet, dass** der Solldruck (psoll) im Druckbereich (38) mindestens für den Vorlauf der elektrischen Kraftstoffpumpe (36) von der Temperatur (tmot) in einem Bereich der Brennkraftmaschine (10) abhängt.

10. Computerprogramm, **dadurch gekennzeichnet, dass** es zur Durchführung des Verfahrens nach einem der vorhergehenden Ansprüche geeignet ist, wenn es auf einem Computer ausgeführt wird.

11. Computerprogramm nach Anspruch 10, **dadurch gekennzeichnet, dass** es auf einem Speicher, insbesondere auf einem Flash-Memory oder einem Ferrit-RAM, abgespeichert ist.

12. Steuer-und/oder Regelgerät (46) zum Betreiben einer Brennkraftmaschine (10), bei der der Kraftstoff von einer elektrisch angetriebenen Kraftstoffpumpe (36) gefördert wird, welche einlassseitig mit einem Kraftstoffbehälter (34) und auslassseitig mit einem Druckbereich (38) verbunden ist, **dadurch gekennzeichnet, dass** es einen Speicher umfasst, auf dem ein Computerprogramm nach einem der Ansprüche 10 oder 11 abgespeichert ist.

13. Brennkraftmaschine (10) mit einem Kraftstoffsystem (32), mit einem Kraftstoffbehälter (34), mit einer elektrisch angetriebenen Kraftstoffpumpe (36), welche einlassseitig mit dem Kraftstoffbehälter (34) und auslassseitig mit einem Druckbereich (38) verbunden ist, wobei vor oder beim Starten der Brennkraftmaschine (10) ein Vorlauf der elektrisch angetriebenen Kraftstoffpumpe (36) erfolgen kann (64), wobei ein Drucksensor (44) vorhanden ist, welcher einen Istdruck (pist) im Druckbereich (38) erfasst, und die Durchführung des Vorlaufs mindestens vom Signal des Drucksensors (44) abhängt, **dadurch gekennzeichnet, dass** sie ein Steuer- und/oder Regelgerät (46) nach Anspruch 12 umfasst.

## Claims

1. Method for operating an internal combustion engine (10) in which the fuel is fed by an electrically driven fuel pump (36) which is connected at the inlet end to a fuel container (34) and at the outlet end to a pressure region (38), and in which before the internal combustion engine (10) is started the electrically driven fuel pump (36) can be primed, an actual pressure (pist) in the pressure region (38) being sensed by a pressure sensor (44), and the execution of the priming depending (62) at least on the signal of the pressure sensor (44), **characterized in that** the power of the electric fuel pump (36) is first at a maximum (aslmax) for priming and then depends on the signal of the pressure sensor (44) during the priming.

2. Method according to Claim 1, **characterized in that** the execution of the priming depends on whether priming (64) has already been carried out (62) in the current operating cycle.

3. Method according to one of the preceding claims, **characterized in that** priming of the electric fuel pump (36) is carried out if the actual pressure (pist) is at least equal to a specific value (G1) or less than a specific value and/or the priming of the electric fuel pump (36) is ended if the actual pressure (pist) reaches or exceeds a specific value (G2).

4. Method according to one of the preceding claims, **characterized in that** the priming of the electric fuel pump (36) is ended if the duration (tekp) of the priming reaches or exceeds a specific value (G3).

5. Method according to one of the preceding claims, **characterized in that** the power of the fuel pump (36) is influenced by a PI controller (78) as a function of the difference between the actual pressure (pist) and a setpoint pressure (psoll) in the pressure region (38) and by a pilot controller (82) as a function of the setpoint pressure (psoll), and **in that** for priming of the electric fuel pump (36) an integrator (88) of the PI controller (78) is initialized with the following values or values corresponding thereto: maximum possible drive power (aslmax) minus normal pilot control power (vsldyn) minus drive power of the P component (dpp) of the PI controller (78).

6. Method according to one of the preceding claims, **characterized in that** the power of the fuel pump (36) is influenced by a PI controller (78) as a function of the difference between the actual pressure (pist) and a setpoint pressure (psoll) in the pressure region (38) and by a pilot controller (82) as a function of the setpoint pressure (psoll), and **in that**, for priming of the electric fuel pump (36), an additional priming pilot control power (vslvor) is added in the pilot controller (82) to the normal pilot control power (vsldyn) in such a way that the entire pilot control power (vsl) is initially at a maximum.

7. Method according to Claim 6, **characterized in that** the additional pilot control power (vslvor) is formed by setting the value zero at the input of a low-pass filter (112) at the start of the priming of the electric fuel pump (36) and initializing the low-pass filter (112) with the following value or a corresponding value: maximum possible drive power (aslmax) minus normal pilot control power (vsldyn).

8. Method according to Claim 7, **characterized in that** a time constant (T) of the low-pass filter (112) depends on the difference between the actual pressure (pist) and the setpoint pressure (psoll) in the pressure region (38).

9. Method according to one of the preceding claims, **characterized in that** the setpoint pressure (psoll) in the pressure region (38) depends, at least for the priming of the electric fuel pump (36), on the temperature (tmot) in a region of the internal combustion engine (10).

10. Computer program, **characterized in that** it is suitable for executing the method according to one of the preceding claims if it is run on a computer.

11. Computer program according to Claim 10, **characterized in that** it is stored on a memory, in particular on a flash memory or a ferrite RAM.

12. Open-loop and/or closed-loop control device (46) for operating an internal combustion engine (10), in which the fuel is fed by an electrically driven fuel pump (36) which is connected at the inlet end to a fuel container (34) and at the outlet end to a pressure region (38), **characterized in that** it comprises a memory on which a computer program according to one of Claims 10 or 11 is stored.

13. Internal combustion engine (10) having a fuel system (32), having a fuel container (34), having an electrically driven fuel pump (36) which is connected at the inlet end to the fuel container (34) and at the outlet end to a pressure region (38), priming of the electrically driven fuel pump (36) being able to occur (64) before and during the starting of the internal combustion engine (10), a pressure sensor (44) being provided which senses an actual pressure (pist) in the pressure region (38), and the execution of the priming depends at least on the signal of the pressure sensor (44), **characterized in that** said internal combustion engine (10) comprises an open-loop and/or closed-loop control device (46) according to Claim 12.

## Revendications

1. Procédé pour faire fonctionner un moteur à combustion interne (10), selon lequel le carburant est refoulé par une pompe à carburant électrique (36) reliée côté entrée à un réservoir de carburant (34), et côté sortie à une zone de pression (38), et selon lequel une marche préalable de la pompe à carburant électrique (36) peut s'effectuer avant le démarrage du moteur à combustion interne (10) en saisissant une pression réelle (préelle) dans la zone de pression (38) par un capteur de pression (44) et en effectuant la marche préalable en fonction (62) au moins du signal du capteur de pression (44),
**caractérisé en ce que**
lors d'une marche préalable, la puissance de la pompe à carburant électrique (36) est d'abord maximale (aslmax) puis, pendant la marche préalable, fonction du signal du capteur de pression (44).

2. Procédé selon la revendication 1,
**caractérisé en ce que**
la réalisation de la marche préalable est fonction de ce que déjà une réalisation (62) d'une marche préalable (64) a été faite dans le cycle de fonctionnement actuel.

3. Procédé selon l'une quelconque des revendications précédentes,
**caractérisé en ce qu'**
on réalise une marche préalable de la pompe à carburant électrique (36) si la pression réelle (préelle) est au moins égale à une valeur déterminée (G1) ou inférieure à une valeur déterminée, et/ ou on termine la marche préalable de la pompe à carburant électrique (36) si la pression réelle (préelle) atteint ou dépasse une valeur déterminée (G2).

4. Procédé selon l'une quelconque des revendications précédentes,
**caractérisé en ce qu'**
on termine la marche préalable de la pompe à carburant électrique (36) si la durée (tekp) de la marche préalable atteint ou dépasse une valeur déterminée (G3).

5. Procédé selon l'une quelconque des revendications précédentes,
**caractérisé en ce que**
la puissance de la pompe à carburant (36) est influencée par un régulateur PI (78) en fonction de la différence entre la pression réelle (préelle) et une pression de consigne (pcons) dans la zone de pression (38), et par un pilotage (82) en fonction de la pression de consigne (pcons) et, pour une marche préalable de la pompe à carburant électrique (36), un intégrateur (88) du régulateur PI (78) est initialisé avec les valeurs suivantes ou des valeurs correspondant à celles-ci : puissance de commande maximale possible (aslmax) moins puissance de pilotage normale (vsldyn) moins puissance de commande de la partie P (dpp) du régulateur PI (78).

6. Procédé selon l'une quelconque des revendications précédentes,
**caractérisé en ce que**
la puissance de la pompe à carburant (36) est influencée par un régulateur PI (78) en fonction de la différence entre la pression réelle (préelle) et une pression de consigne (pcons) dans la zone de pression (38) et par un pilotage (82) en fonction de la pression de consigne (pcons) et, pour une marche préalable de la pompe à carburant électrique (36), on additionne pendant la marche préalable (82) à la puissance de marche préalable normale (vsldyn) une puissance de pilotage de marche préalable supplémentaire (vslvor) de sorte que la totalité de la puissance de pilotage (vsl) soit d'abord maximale.

7. Procédé selon la revendication 6,
**caractérisé en ce que**
la puissance de pilotage supplémentaire (vslvor) est formée en plaçant la valeur zéro sur l'entrée d'un passe-bas (112) au début de la marche préalable de la pompe à carburant électrique (36) et en initialisant le passe-bas (112) avec la valeur suivante ou une valeur correspondante : puissance de commande maximale possible (aslmax) moins puissance de pilotage normale (vsldyn).

8. Procédé selon la revendication 7,
**caractérisé en ce qu'**
une constante de temps (T) du passe-bas (112) est fonction de la différence entre la pression réelle (préelle) et la pression de consigne (pcons) dans la zone de pression (38).

9. Procédé selon l'une quelconque des revendications précédentes,
**caractérisé en ce que**
la pression de consigne (pcons) dans la zone de pression (38) est fonction de la température (tmot) dans une zone du moteur à combustion interne (10) au moins pour la marche préalable de la pompe à carburant électrique (36).

10. Programme informatique,
**caractérisé en ce qu'**
il est approprié pour la réalisation du procédé selon l'une quelconque des revendications précédentes s'il est exécuté sur un ordinateur.

11. Programme informatique selon la revendication 10,
**caractérisé en ce qu'**
il est stocké dans une mémoire, en particulier une mémoire flash ou une mémoire morte à ferrite.

12. Appareil de commande et/ou de régulation (46) pour faire fonctionner un moteur à combustion interne (10), dans lequel le carburant est refoulé par une pompe à carburant électrique (36) reliée côté entrée à un réservoir de carburant (34), et côté sortie à une zone de pression (38),
**caractérisé en ce qu'**
il comprend une mémoire dans laquelle est stocké un programme informatique selon l'une quelconque des revendications 10 ou 11.

13. Moteur à combustion interne (10) muni d'un système d'alimentation en carburant (32), d'un réservoir de carburant (34), d'une pompe à carburant électrique (36) reliée côté entrée au réservoir de carburant (34), et côté sortie à une zone de pression (38), une marche préalable de la pompe à carburant électrique (36) pouvant s'effectuer avant ou lors du démarrage du moteur à combustion interne (10), un capteur de pression (44) étant prévu pour détecter une pression réelle (préelle) dans la zone de pression (38), et la réalisation de la marche préalable étant fonction au moins du signal du capteur de pression (44),
**caractérisé en ce qu'**
il comprend un appareil de commande et/ou de régulation (46) selon la revendication 12.
